(19) **Europäisches Patentamt / European Patent Office / Office européen des brevets**

(11) **EP 4 600 845 A1**

(12) **EUROPEAN PATENT APPLICATION**
published in accordance with Art. 153(4) EPC

(43) Date of publication:
**13.08.2025 Bulletin 2025/33**

(21) Application number: **24875682.7**

(22) Date of filing: **02.07.2024**

(51) International Patent Classification (IPC):
**G06F 17/16** (2006.01)

(86) International application number:
**PCT/CN2024/103066**

(87) International publication number:
**WO 2025/138681 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.12.2023 CN 202311809667**

(71) Applicants:
- **Zhongtian Power Optical Cable Co., Ltd.**
  **Nantong, Jiangsu 226000 (CN)**
- **Jiangsu Zhongtian Technology Co., Ltd.**
  **Nantong, Jiangsu 226000 (CN)**

(72) Inventors:
- **WU, Mingnian**
  **Nantong**
  **Jiangsu 226000 (CN)**
- **SHAO, Chentong**
  **Nantong**
  **Jiangsu 226000 (CN)**
- **WU, Zhengming**
  **Nantong**
  **Jiangsu 226000 (CN)**
- **CHEN, Qingqing**
  **Nantong**
  **Jiangsu 226000 (CN)**
- **SHEN, Yichun**
  **Nantong**
  **Jiangsu 226000 (CN)**
- **MU, Zhangjian**
  **Nantong**
  **Jiangsu 226000 (CN)**
- **WU, Kun**
  **Nantong**
  **Jiangsu 226000 (CN)**
- **LI, Songlin**
  **Nantong**
  **Jiangsu 226000 (CN)**
- **WANG, Daogen**
  **Nantong**
  **Jiangsu 226000 (CN)**
- **ZHU, Ming**
  **Nantong**
  **Jiangsu 226000 (CN)**

(74) Representative: **Boult Wade Tennant LLP**
**Salisbury Square House**
**8 Salisbury Square**
**London EC4Y 8AP (GB)**

(54) **ANCHOR DAMAGE DETECTION METHOD AND APPARATUS, PROCESSOR, AND ELECTRONIC DEVICE**

(57) The present application discloses a method for detecting anchor damage, an apparatus, a processor and an electronic device. The method includes: obtaining n phase signals to be detected; performing feature extraction on the n phase signals to obtain p phase signal values corresponding to each phase signal; constructing a target matrix that is initially empty and has a matrix size of m*n; sequentially filling the p phase signal values corresponding to each phase signal into the target matrix; performing a convolution processing on the target matrix of the convolution detection state to obtain a first convolution result, and determining a first anchor damage detection result for each of the n phase signals under the first time information based on the first convolution result; removing the phase signal values filled in the first row of the target matrix, moving the phase signal values filled in the second row to the m-th row of the target matrix to the first row to the (m-1)-th row, and restoring the target state of the target matrix from the convolution detection state to the signal filling state. The present application solves the problem of low accuracy in anchor damage detection in related technologies.

EP 4 600 845 A1

Obtaining n phase signals to be detected, where n is a positive integer — S101

Performing feature extraction on the n phase signals to obtain p phase signal values corresponding to each phase signal — S102

Constructing a target matrix that is initially empty and has a matrix size of m*n, where m is indicates first time information selected from all time information corresponding to the p phase signal values, m and p are positive integers, and m is less than p — S103

Sequentially filling the p phase signal values, which are corresponding to each phase signal, into the target matrix, where in a case where an area in which a phase signal value is not filled is non-existent, a target state of the target matrix is determined as a convolution detection state — S104

Performing a convolution processing on the target matrix of the convolution detection state to obtain a first convolution result, and determining a first anchor damage detection result for each of the n phase signals under the first time information based on the first convolution result — S105

Removing the phase signal values filled in a first row of the target matrix, moving the phase signal values filled in a second row to a m-th row of the target matrix to the first row to a (m-1)-th row, respectively, and restoring the target state of the target matrix from the convolution detection state to a signal filling state — S106

FIG. 1

**Description**

This application claims priority to Chinese Patent Application No. 202311809667.1, entitled "Method for Detecting Anchor Damage, Apparatus, Processor, and Electronic Device" and filed to the China National Intellectual Property Administration on December 25, 2023, which is hereby incorporated by reference in its entirety.

**TECHNICAL FIELD**

The present application relates to the technical filed of optical cable detection and, in particular, to a method for detecting anchor damage, an apparatus, a processor, and an electronic device.

**BACKGROUND**

Anchor intrusion damage refers to the accidental contact of submarine anchor chains or other anchoring equipment with optical cables, which may cause damage, breakage, or other problems to the optical cables. Such incidents not only incur expensive repair and replacement costs but may also lead to data transmission interruption, affecting the availability and reliability of the communication network.

Currently, there are several related technologies for monitoring and preventing anchor intrusion damage to submarine optical cables, for example, underwater sensors and camera equipment are used to monitor activities around the optical cables. However, this method may be limited by underwater visibility and harsh marine conditions, thereby leading to problems regarding the accuracy of detection results.

That is, there is a technical problem of low accuracy of anchor damage detection in related technologies.

**SUMMARY**

The main objective of the present application is to provide a method for detecting anchor damage, an apparatus, a processor and an electronic device to solve the problem of low accuracy of anchor damage detection in related technologies, which improves the accuracy of anchor damage detection.

**In** a first aspect, the present application discloses a method for detecting anchor damage, including:

obtaining n phase signals to be detected, where n is a positive integer;
performing feature extraction on the n phase signals to obtain p phase signal values corresponding to each phase signal;
constructing a target matrix that is initially empty and has a matrix size of m*n, where m indicates first time information selected from all time information corresponding to the p phase signal values, m and p are positive integers, and m is smaller than p;
sequentially filling the p phase signal values corresponding to each phase signal into the target matrix, where in a case where an area in which a phase signal value is not filled is non-existent in the target matrix, a target state of the target matrix is determined as a convolution detection state;
performing a convolution processing on the target matrix of the convolution detection state to obtain a first convolution result, and determining a first anchor damage detection result for each of the n phase signals under the first time information based on the first convolution result;
removing the phase signal values filled in a first row of the target matrix, moving the phase signal values filled in a second row to a m-th row of the target matrix to the first row to a (m-1)-th row, respectively, and restoring the target state of the target matrix from the convolution detection state to a signal filling state;

Based on the above technical content, by means of constructing the target matrix and using a first-in, first-out detection sequencing, a plurality of convolution detection processings are sequentially performed on a target number of phase signal values from the p phase signal values. After an anchor damage detection result for each phase signal at current time information is obtained by each convolution detection processing, signal value data earliest filled in a row of the target matrix is removed, signal value data in subsequent rows are moved forward to allow the further filling of a new row of signal value data, and a convolution detection processing is then performed on the overall new signal value data to obtain an anchor damage detection result for each phase signal at new time information. This not only achieves the purposes of autonomously controlling identification range and self-defining a duration of an anchor damage event, but also enables multiple, global detections of anchor damage events under different time information based on certain signal data, thereby achieving the technical effect of improving the accuracy of anchor damage detection.

In one embodiment, the performing the convolution processing on the target matrix in the convolution detection state to obtain the first convolution result and determining the anchor damage detection result for each of the n phase signals based on the first convolution result, including: performing, by using a two-dimensional convolution kernel, a two-dimensional convolution operation on the target matrix to obtain a first computation matrix with a matrix size of i*j; marking elements, whose values are greater than a first preset threshold, in the first computation matrix as 1, and marking elements, whose values are not greater than the first preset threshold, in the convolution matrix as 0 to obtain a second computation matrix; performing column-wise summing of the elements included in the second computation matrix to obtain a third computation matrix with a matrix size of 1*j; performing judgment on each of values of j elements included in the third computation matrix based on the values of the j elements and a second preset threshold value to obtain the first anchor damage detection result.

Further, by utilizing the two-dimensional convolution method to determine submarine anchor damage events, it is possible to achieve the functions of autonomously controlling an identification range, self-defining a duration and vibration intensity of an anchor damage event. Additionally, based on a certain amount of signal data, multiple and global detections of anchor damage events at different time information can be achieved, thereby improving the accuracy of anchor damage detection.

In one embodiment, the performing judgment on each of the values of the j elements included in the third computation matrix based on each of the values of the j elements and the second preset threshold value, including: sequentially selecting each current element from the j elements; determining that an anchor damage risk exists in an optical fiber area for the phase signal corresponding to the current element, in a case where the current element has a value greater than the second preset threshold value multiplied by i.

Further, by performing judgment on each of the values of the j elements included in the third computation matrix and the second preset threshold value, the first anchor damage detection result is obtained. This achieves the functions of autonomously controlling an identification range, self-defining a duration and vibration intensity of an anchor damage event. Even in the absence of actual anchor damage data, the identification and localization of anchor damage events can still be achieved, thereby achieving the technical effect of improving the accuracy of anchor damage detection.

In one embodiment, the performing, by using the two-dimensional convolution kernel, the two-dimensional convolution operation on the target matrix, including: obtaining the two-dimensional convolution kernel with a matrix size of k*k, where k is an odd number, and k is not greater than m and k is not greater than n; performing a row filling processing and a column filling processing on the target matrix to obtain a filled target matrix with a matrix size of k*k; performing, by using the two-dimensional convolution kernel, a multiplication processing on the filled target matrix.

Further, by performing a row filling processing and a column filling processing on the target matrix, the input and output are ensured to have the same height and width, thereby improving the accuracy of subsequent data processing and achieving the technical effect of improving the accuracy of anchor damage detection.

In one embodiment, after the restoring the target state of the target matrix from the convolution detection state to the signal filling state, the method further includes: sequentially selecting n phase signal values from a plurality of phase signal values, which are not filled into the target matrix, of the p phase signal values; sequentially filling the n phase signal values in the m-th row area of the target matrix; adjusting the target state from the signal filling state to the convolution detection state after all the n phase signal values are filled into the target matrix; performing a second convolution processing on the target matrix of the convolution detection state to obtain a second convolution result, and determining a second anchor damage detection result for each of the n phase signals under second time information based on the second convolution result.

Further, by constructing the target matrix and using a first-in, first-out detection sequencing, a plurality of convolution detection processings are sequentially performed on a target number of phase signal values from the p phase signal values. After an anchor damage detection result for each phase signal at current time information is obtained by each convolution detection processing, signal value data earliest filled in a row of the target matrix is removed, signal value data in subsequent rows are moved forward to allow the further filling of a new row of signal value data, and a convolution detection processing is then performed on the overall new signal value data to obtain an anchor damage detection result for each phase signal at new time information, thereby achieving the technical effect of improving the accuracy of anchor damage detection.

In one embodiment, the performing the feature extraction on the n phase signals to obtain the p phase signal values corresponding to each phase signal, including: performing feature variance extraction on each of the n phase signals according to a first period to obtain phase feature values corresponding to a plurality of first periods; summing the phase feature values corresponding to the plurality of first periods according to a second period to obtain the p phase signal values corresponding to each phase signal, where one second period includes at least two first periods, and different second periods are mutually non-overlapping.

Further, by performing preprocessing such as variance processing, to-be-detected objects encompassing global signal information over a period of time are obtained, this thus achieves the purpose of improving the accuracy of subsequent data processing from the source of data processing, thereby achieving the technical effect of improving the accuracy of anchor damage detection.

In one embodiment, the obtaining the n phase signals to be detected, including: emitting, by using a laser light source, laser light into a coupler, where the coupler directs light intensity detection light, which is a first portion of the laser light, into an acousto-optic modulator to obtain a pulse signal, where the acousto-optic modulator is configured to convert the laser light into the pulse signal; amplifying, by using an erbium-doped fiber amplifier, the pulse signal and then inputting it into an optical fiber to obtain Rayleigh scattering light of the optical fiber, and determining two coherent light beams based on the Rayleigh scattering light and a second portion of intrinsic light split by the coupler; inputting the two coherent light beams into a balanced detector to obtain a target electrical signal, where the smoothing detector is configured to convert an optical signal into an electrical signal; inputting the target electrical signal into an acquisition card to obtain one of the n phase signals output through the acquisition card.

Further, the entire process achieves the conversion and extraction of optical signals to electrical signals, and then to digital phase signals through the cooperation of components such as the laser light source, coupler, acousto-optic modulator, erbium-doped fiber amplifier, optical fiber, balanced detector, and acquisition card. This provides fundamental data for subsequent anchor damage detection, thereby achieving the technical effect of improving the accuracy of anchor damage detection.

In the second aspect, the present application discloses an apparatus for detecting anchor damage, including: an obtaining unit, configured to obtain n phase signals to be detected, where n is a positive integer; an extracting unit, configured to perform feature extraction on the n phase signals to obtain p phase signal values corresponding to each phase signal; a constructing unit, configured to construct a target matrix that is initially empty and has a matrix size of m*n, where m indicates first time information selected from all time information corresponding to the p phase signal values, and m and p are positive integers and m is smaller than p; a filling unit, configured to sequentially fill the p phase signal values corresponding to each phase signal into the target matrix, where in a case where an area in which a phase signal value is not filled is non-existent in the target matrix, a target state of the target matrix is determined as a convolution detection state; a convolving unit, configured to perform a convolution processing on the target matrix of the convolution detection state to obtain a first convolution result, and to determine a first anchor damage detection result for each of the n phase signals under the first time information based on the first convolution result; a removing unit, configured to remove the phase signal values that have been filled in a first row of the target matrix, move the phase signal values filled in a second row to a m-th row to the first row to a (m-1)-th row, and restore the target state of the target matrix from the convolution detection state to a signal filling state.

In the third aspect, the present application discloses an anchor damage detection processor, the above processor is configured to run a program, where the program, when running, executes the above anchor damage detection method.

In the fourth aspect, the present application discloses an anchor damage detection electronic device, the above the electronic device includes a processor, a memory, and a program stored in the memory and executable on the processor, and the processor executes the program to implement the above anchor damage detection method.

In the fifth aspect, the present application discloses a computer-readable storage medium, the computer-readable storage medium stores a program, and the above anchor damage detection method is implemented when the program is executed by a processor.

In the sixth aspect, the present application discloses a computer program product, including a computer program, and the above anchor damage detection method is implemented when the computer program is executed by a processor.

In combination with the above technical solutions, in the anchor damage detection method, apparatus, processor, and electronic device provided by the present application, by means of constructing the target matrix and using a first-in, first-out detection sequencing, a plurality of convolution detection processings are sequentially performed on a target number of phase signal values from the p phase signal values. After an anchor damage detection result for each phase signal at current time information is obtained by each convolution detection processing, signal value data earliest filled in a row of the target matrix is removed, signal value data in subsequent rows are moved forward to allow the further filling of a new row of signal value data, and a convolution detection processing is then performed on the overall new signal value data to obtain an anchor damage detection result for each phase signal at new time information. This not only achieves the purposes of autonomously controlling identification range and self-defining a duration of an anchor damage event, but also enables multiple, global detections of anchor damage events under different time information based on certain signal data, thereby achieving the technical effect of improving the accuracy of anchor damage detection.

**BRIEF** DESCRIPTION OF DRAWINGS

FIG. 1 is a flowchart of a method for detecting anchor damage provided according to an embodiment of the present application.
FIG. 2 is a schematic diagram of a method for detecting anchor damage provided according to an embodiment of the present application.

FIG. 3 is a schematic diagram of original phase features of an entire optical cable provided according to an embodiment of the present application.

FIG. 4 is a schematic diagram of a 01 matrix of vibration positions when a convolution kernel is (3,3) provided according to an embodiment of the present application.

FIG. 5 is a schematic diagram of a 01 matrix of vibration positions when a convolution kernel is (5,5) provided according to an embodiment of the present application.

FIG. 6 is a schematic diagram of data of original phase features after being subjected to two-dimensional convolution provided according to an embodiment of the present application.

FIG. 7 is a schematic diagram of original phase features of an optical cable when it is subjected to a single-point anchor damage test provided according to an embodiment of the present application.

FIG. 8 is a schematic diagram of an apparatus for detecting anchor damage provided according to an embodiment of the present application.

FIG. 9 is a schematic diagram of an electronic device for detecting anchor damage provided according to an embodiment of the present application.

DESCRIPTION OF EMBODIMENTS

It should be noted that, the embodiments and features in the embodiments of the present application can be combined with each other under non-conflicting conditions. The present application will be described in detail below with reference to the accompanying drawings and in combination with the embodiments.

In order to enable those skilled in the art to better understand the solutions of the present application, the technical solutions in the embodiments of the present application will be clearly and completely described below in conjunction with the accompanying drawings in the embodiments of the present application. Apparently, the described embodiments are only part of the embodiments of the application, not all of them. Based on the embodiments in this application, all other embodiments obtained by those of ordinary skill in the art without creative efforts should fall within the scope of protection of this application.

It should be noted that the terms "first", "second", etc. in the description, claims and the above drawings of the application are used to distinguish similar objects and are not necessarily used to describe a specific order or sequence. It should be understood that data so used may be interchanged where appropriate for the embodiments of the application described herein. Further, the terms "include" and "have" and any variations thereof are intended to cover non-exclusive inclusions, e.g., a process, method, system, product, or apparatus that includes a series of steps or units needs not be limited to those steps or units explicitly listed, but may include other steps or elements that are not expressly listed or inherent to the process, method, product, or apparatus.

It should be noted that the relevant information (including but not limited to user device information, user personal information, etc.) and data (including but not limited to data for display, analysis data, etc.) involved in this disclosure are all information and data authorized by users or fully authorized by all parties. For example, there is an interface between this system and relevant users or institutions. Before relevant information is obtained, it is necessary to send an acquisition request to the aforementioned users or institutions through the interface, and after consent information fed back by the aforementioned users or institutions is received, the relevant information is obtained.

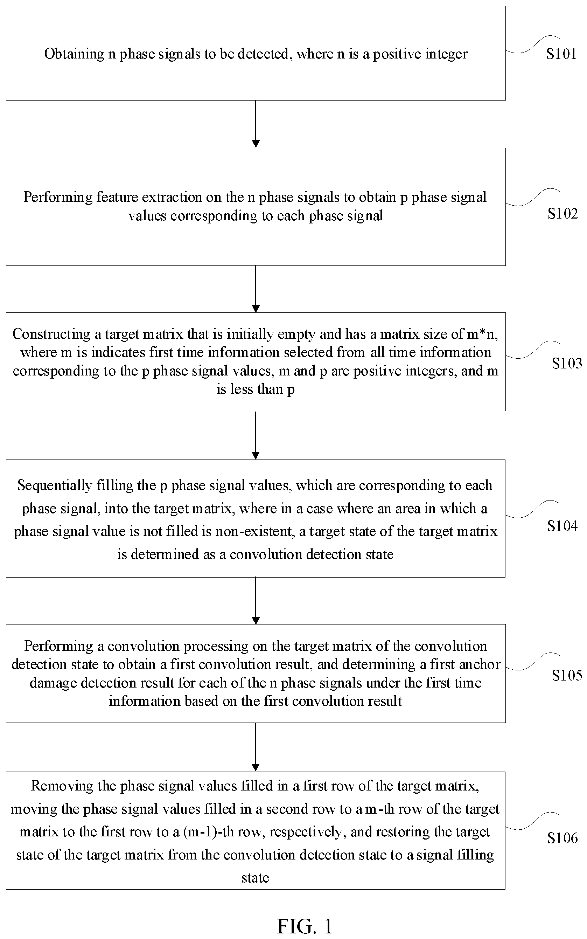

The present application will be described below in conjunction with preferred implementation steps. FIG. 1 is a flowchart of a method for detecting anchor damage provided according to an embodiment of the present application. As shown in FIG. 1, the method includes the following steps:

step S101, obtaining n phase signals to be detected, where n is a positive integer;

step S102, performing feature extraction on the n phase signals to obtain p phase signal values corresponding to each phase signal;

step S103. constructing a target matrix that is initially empty and has a matrix size of m*n, where m indicates first time information selected from all time information corresponding to the p phase signal values, m and p are positive integers, and m is smaller than p;

step S104, sequentially filling the p phase signal values corresponding to each phase signal into the target matrix, where in a case where an area in which a phase signal value is not filled is non-existent in the target matrix, a target state of the target matrix is determined as a convolution detection state;

step S105, performing a convolution processing on the target matrix of the convolution detection state to obtain a first convolution result, and determining a first anchor damage detection result for each of the n phase signals under the first time information based on the first convolution result;

step S106, removing the phase signal values filled in a first row of the target matrix, moving the phase signal values filled in a second row to a m-th row of the target matrix to the first row to a (m-1)-th row, respectively, and restoring the target state of the target matrix from the convolution detection state to a signal filling state.

Optionally, in the present embodiment, the above method for detecting anchor damage may be applied, but is not limited, to the scenario of online determination of submarine anchor damage. With the rapid development of the Internet, submarine optical cable networks have become one of the main infrastructures for global information transmission. These optical cable networks play a vital role in connecting international data centers, communications systems and cloud computing services. However, the laying and maintenance of submarine optical cables in marine environments faces a series of challenges, one of which is the threat of submarine anchor intrusion damage.

Traditionally, anchor intrusion damage refers to the accidental contact of submarine anchor chains or other anchoring equipment with optical cables, which may cause damage, breakage or other problems to the optical cables. Such incidents not only incur expensive repair and replacement costs but may also lead to data transmission interruption, affecting the availability and reliability of communication network.

Currently, there are several related technologies for monitoring and preventing anchor intrusion damage to submarine optical cables, including but not limited to: 1) anchor damage detection systems: some methods adopt underwater sensors and camera equipment to monitor activities around optical cables, however, these systems may be limited by underwater visibility and harsh marine conditions; 2) physical protection: other methods adopt physical protection measures, such as armoring and protective layers, to improve the resistance of optical cables to anchor damage, however, these increase costs and complexity.

At the same time, due to the lack of anchor damage data, an anchor damage event only occurs once every 30,000 hours according to statistics, it is difficult to determine anchor damage in the absence of data.

For the above problems, the above method for detecting anchor damage is used, by means of constructing a target matrix and using a first-in, first-out detection sequencing, a plurality of convolution detection processings are sequentially performed on a target number of phase signal values from the p phase signal values. After an anchor damage detection result for each phase signal at current time information is obtained by each convolution detection processing, signal value data earliest filled in a row of the target matrix is removed, signal value data in subsequent rows are moved forward to allow the further filling of a new row of signal value data, and a convolution detection processing is then performed on the overall new signal value data to obtain an anchor damage detection result for each phase signal at new time information. This not only achieves the purpose of autonomously controlling an identification range and self-defining a duration of an anchor damage event, but also enables multiple, global detections of anchor damage events under different time information based on certain signal data, thereby achieving the technical effect of improving the accuracy of anchor damage detection.

Optionally, in the present embodiment, obtaining n phase signals to be detected may, but is not limited to, be achieved by a distributed optical fiber disturbance monitoring system. DAS adopts a laser light source to emit laser light into a coupler, the coupler directs 90% of the laser light, which is laser intensity detection light, into an acousto-optic modulator. The acousto-optic modulator converts the laser light into a pulse signal, and the pulse signal is amplified by an erbium-doped fiber amplifier and then input into an optical fiber. Rayleigh scattering light in the optical fiber and the other 10% of intrinsic light split by the coupler enter the coupler and are outputted as two coherent light beams into a balanced detector, thereby converting an optical signal into an electrical signal, which is ultimately input into an acquisition card to obtain one phase signal.

Optionally, in the present embodiment, regarding feature extraction the characteristics of the acquisition card may be considered, but it is not limited thereto, and phase signals are output every 0.1 seconds. Therefore, phase signals every 0.1 seconds are subjected to variance processing, and the formula is as follows:

$$\mathrm{var} = \frac{1}{N} \sum_{i=1}^{N} \left( x_i - \mu \right)^2$$

Where $N$ is the number of phase signals every 0.1 seconds, $x_i$ is a value of each phase signal, and $\mu$ is an average phase value every 0.1 seconds. The phase signals every 0.1 seconds are accumulated to 1 second and summed to obtain a phase feature signal value every 1 second. The phase feature signal value every 1 second is determined as a phase signal value corresponding to a phase signal described as above.

Optionally, in the present embodiment, different phase signal values among the p phase signal values correspond to different time information, where phase signal values obtained earlier through feature extraction/variance processing correspond to earlier time information, and are earlier filled in the target matrix sequentially.

Optionally, in the present embodiment, when m*n phase signal values have been filled in the target matrix, the target state of the target matrix is determined as a convolution detection state. It can be understood that, when there are areas in the target matrix that are not filled with corresponding phase signal values, the target state of the target matrix is determined as a signal filling state.

Optionally, in the present embodiment, when the target state of the target matrix is the convolution detection state, convolution processing is performed on the target matrix to obtain a first convolution result indicating a first anchor damage detection result for one of the n phase signals under the first time information.

It should be noted that when the phase signal values included in the target matrix are different, time information indicated by the anchor damage detection result obtained by subsequent convolution processing is also different, where the time information indicated by the anchor damage detection result corresponds to each phase signal value included in the target matrix.

Optionally, in the present embodiment, after the first anchor damage detection result under the above-mentioned first time information is obtained, the phase signal values filled in the first row of the target matrix are removed, and the phase signal values filled in the second row to the m-th row of the target matrix are moved to the first row to the (m-1)-th row, and the target state of the target matrix is restored from the convolution detection state to the signal filling state.

It should be noted that, after the target state of the target matrix is restored from the convolution detection state to the signal filling state, n phase signal values are sequentially selected from a plurality of phase signal values, which are not filled in in the target matrix, of the p phase signal values; the n phase signal values sequentially filled in the m-th row area of the target matrix; after all the n phase signal values are filled into the target matrix, the target state is adjusted from the signal filling state to the convolution detection state; the target matrix in the convolution detection state is subjected to a second convolution processing to obtain a second convolution result, and a second anchor damage detection result for each of the n phase signals under the second time information is determined based on the second convolution result.

As a further example, phase signal values are sequentially filled into an empty matrix $A(m,n)$, and when the number of phase feature signals exceeds $m$ and becomes $m+1$, the original 1st signal is deleted from the matrix $A(m,n)$, the original 2nd to $m$-th data are moved forward to become 1st to $m-1$-th data, the subsequent $m+1$-th data becomes $m$ - th data, and so on when subsequent new signals enter.

With the embodiments provided by the present application, by means of constructing a target matrix and using a first-in, first-out detection sequencing, a plurality of convolution detection processings are sequentially performed on a target number of phase signal values from the p phase signal values. After an anchor damage detection result for each phase signal at current time information is obtained by each convolution detection process, signal value data earliest filled in a row of the target matrix is removed, signal value data in subsequent rows are moved forward to allow the further filling of a new row of signal value data, and a convolution detection process is then performed on the overall new signal value data to obtain an anchor damage detection result for each phase signal at new time information. This not only achieves the purpose of autonomously controlling an identification range and self-defining a duration of an anchor damage event, but also enables multiple, global detections of anchor damage events under different time information based on certain signal data, thereby achieving the technical effect of improving the accuracy of detecting of anchor damage.

As an optional solution, the performing the convolution processing on the target matrix of the convolution detection state to obtain the first convolution result, and determining the anchor damage detection results for each of the n phase signals based on the first convolution result, including:

> S1, performing, by using a two-dimensional convolution kernel, a two-dimensional convolution operation on the target matrix to obtain a first computation matrix with a matrix size of i*j;
> S2, marking elements, whose values are greater than a first preset threshold, in the first computation matrix as 1, and marking elements, whose values are not greater than the first preset threshold, in the convolution matrix as 0 to obtain a second computation matrix;
> S3, performing column-wise summing of the elements included in the second computation matrix to obtain a third computation matrix with a matrix size of 1*j; and
> S4, performing judgment on each of values of j elements included in the third computation matrix based on each of the values of the j elements and a second preset threshold value to obtain the first anchor damage detection result.

Optionally, in the present embodiment, the target matrix may be, but is not limited to $A(m,n)$, and the two-dimensional convolution kernel may be, but is not limited to $K(p,q)$. When a row of new phase signal values enter the matrix $A(m,n)$, a two-dimensional convolution operation is calculated on matrix $A(m,n)$ to obtain a first computation matrix $O(i, j)$. The computation process is as follows:

$$O(i, j) = (K * A)(i, j) = \sum_{p} \sum_{q} A(i - p, j - q) K(p, q)$$

Where $O(i, j)$ is an output first computation matrix, $A(i+p, j+q)K(p,q)$ represents multiplication of an element $A(i + p, j +q)$ in the input matrix and an element $K(p, q)$ in the kernel matrix, $\sum_{p}$ and $\sum_{n}$ represent summing in the horizontal and vertical directions of the matrix respectively. When convolution is performed, the matrix $A(m, n)$ needs to be filled with $P_h$ rows and $P_w$ columns to ensure that the input and output have the same height and width. General it is set that $P_h = p - 1$,

$P_w = q - 1$, the convolution kernel adopts odd height and width to ensure that both ends are filled with equal quantities.

Optionally, in the present embodiment, for the first computation matrix $O(i, j)$ obtained after convolution, a threshold value $a$ is set and comparison is made with the threshold. Elements greater than the threshold value $a$ in the first computation matrix are marked as 1, and elements smaller than the threshold value $a$ in the first computation matrix are marked as 0, which are stored to obtain a new second computation matrix $O2(i, j)$.

For the second computation matrix $O2(i, j)$ consisting of 01, column-wise summing is performed to form a third computation matrix $O2'(1, j)$, where each value of j in the third computation matrix $O2'(1, j)$ is a summed value of each column in the 01 matrix $O2(i, j)$

It should be noted that when each row of phase signal values are inputted to the matrix $A(m, n)$, an one-dimensional convolution kernel $K(1, q)$ can be used first to perform convolving on each column of phase signal values to obtain $O'(1, j)$, and each column of convolved phase feature signals $O'(1, j)$ are inputted into a matrix to obtain a matrix $O(i, j)$. Its effect is the same as the effect of direct two-dimensional convolution on the entire matrix using a two-dimensional convolution kernel $K(p, q)$. The one-dimensional convolution formula is as follows:

$$O'(1, j) = (K * A)(1, j) = \sum_q A(j - q) K(1, q) \ .$$

With the embodiments provided in the present application, the two-dimensional convolution method is used to determine submarine anchor damage events, which can achieve the function of autonomously controlling an identification range, and self-defining a duration and vibration intensity of an anchor damage event, and multiple and global detections of anchor damage events under different time information based on certain signal data can be achieved, thereby achieving the technical effect of improving the accuracy of detecting of anchor damage.

As an optional solution, the performing judgment on each of the values of the j elements included in the third computation matrix based on each of the values of the j elements and the second preset threshold value, including:

S1, sequentially selecting each current element from the j elements;
S2, determining that an anchor damage risk exists in an optical fiber area of the phase signal corresponding to the current element, in a case where the current element has a value greater than the second preset threshold value multiplied by i,.

Optionally, in the present embodiment, for the third computation matrix $O2'(1, j)$ the number of j is the number of monitoring points, and its value is a summed value of each column in the second computation matrix $O2(i, j)$, a second preset threshold value $b \in (0,1)$ is set, and each j value is judged. When j>b*i, it means that $b$*100% of the signal at this point exceeds the threshold value, it is determined as an anchor damage alarm signal, and then an index signal for this point is restored to its true length to achieve the effect of anchor damage alarming.

In the embodiments provided by the present application, the values of j elements included in the third computation matrix are respectively judged based on the values of the j elements and the second preset threshold value to obtain each first anchor damage detection result. This achieves the function of autonomously controlling an identification range, self-defining a duration and vibration intensity of an anchor damage event, and thus the identification and locating of anchor damage events in the absence of actual anchor damage data can also be achieved, thus achieving the technical effect of improving the accuracy of detecting of anchor damage.

As an optional solution, the performing, by using the two-dimensional convolution kernel, the two-dimensional convolution operation on the target matrix, including:

S1, obtaining the two-dimensional convolution kernel with a matrix size of k*k, where k is an odd number and k is not greater than m and not greater than n;
S2, performing row filling processing and column filling processing on the target matrix to obtain the filled target matrix with a matrix size of k*k; and
S3, performing, by using the two-dimensional convolution kernel, a multiplication processing on the filled target matrix.

Optionally, in the present embodiment, the two-dimensional convolution kernel may be, but is not limited to, in a matrix size of k*k, where k is an odd number and k is not greater than m and not greater than n.

Optionally, in the present embodiment, when convolving is performed, it is necessary to perform row filling processing on the matrix $A(m, n)$ to achieve the purpose of filling $P_h$ rows, and to perform column filling processing on the matrix $A(m, n)$ to achieve the purpose of filling $P_w$ columns, thereby ensuring that the input and output have the same height and width.

In the embodiments provided in the present application, by performing row filling and column filling on the target matrix, it is ensured that the input and output have the same height and width, which thus improves the accuracy of subsequent data processing, thereby achieving the technical effect of improving the accuracy of anchor damage detection.

As an optional solution, after the restoring the target state of the target matrix from the convolution detection state to the signal filling state, the method further includes:

S1, sequentially selecting n phase signal values from a plurality of phase signal values, which are not filled into the target matrix, of the p phase signal values;

S2, sequentially filling the n phase signal values in the m-th row area of the target matrix;

S3, adjusting the target state from the signal filling state to the convolution detection state after all the n phase signal values are filled into the target matrix; and

S4, performing a second convolution processing on the target matrix of the convolution detection state to obtain a second convolution result, and determining a second anchor damage detection result for each of the n phase signals under the second time information based on the second convolution result.

Optionally, in the present embodiment, when the phase signal values included in the target matrix are different, time information indicated by the anchor damage detection result obtained by subsequent convolution processing is also different, where the time information indicated by the anchor damage detection result corresponds to each phase signal value included in the target matrix.

Optionally, in the present embodiment, after an anchor damage detection result corresponding to previous time information is obtained, the phase signal values of the first row included in the target matrix are removed, and the phase signal values of other rows are moved forward one row to get the area of the to-be-filled last row. Phase signal values, which have been not filled, are filled in the unfilled area of the to-be-filled last row, and after completing the filling, the target matrix is determined to enter the convolution detection state. The same processing method is performed with reference to the above convolution processing, and an anchor damage detection result for new time information corresponding to new target matrix is obtained.

With the embodiments provided by the present application, by means of constructing a target matrix and using a first-in, first-out detection sequencing, a plurality of convolution detection processings are sequentially performed on a target number of phase signal values from the p phase signal values. After an anchor damage detection result for each phase signal at current time information is obtained by each convolution detection processing, signal value data earliest filled in a row of the target matrix is removed, signal value data in subsequent rows are moved forward to allow the further filling of a new row of signal value data, and a convolution detection processing is then performed on the overall new signal value data to obtain an anchor damage detection result for each phase signal at new time information, thereby achieving the technical effect of improving the accuracy of anchor damage detecting.

As an optional solution, the performing the feature extraction on the n phase signals to obtain the p phase signal values corresponding to each phase signal, including:

S1, performing feature variance extraction on each of the n phase signals according to a first period to obtain phase feature values corresponding to a plurality of first periods;

S2, summing the phase feature values corresponding to the plurality of first periods according to a second period to obtain the p phase signal values corresponding to each phase signal, where one second cycle includes at least two first cycles and different second cycles are mutually non-overlapping.

Optionally, in the present embodiment, the first period may be, but is not limited to, every 0.1 seconds, and the second period may be, but is not limited to, every 1 second. It can be understood that the first period and the second period may also be, but are not limited to, other time values, and no specific limitation is made for specific time values in the present embodiment.

Optionally, in the present embodiment, the characteristics of the acquisition card is considered, phase signals are output every 0.1 seconds, so the first period is set to be 0.1 seconds, and phase signals every 0.1 seconds are subjected to variance processing, and the formula is as follows:

$$\text{var} = \frac{1}{N} \sum_{i=1}^{N} \left( x_i - \mu \right)^2$$

Where $N$ is the number of phase signals every 0.1 seconds, $x_i$ is a value of each phase signal, and $\mu$ is an average phase value every 0.1 seconds.

Further, the second period is set to be 1 second, the phase signals every 0.1 second are accumulated to 1 second, and summed to obtain a phase feature signal value every 1 second, and the phase feature signal value every 1 second is determined as a phase signal value corresponding to a phase signal described as above.

With the embodiments provided in the present application, by pre-processing such as variance processing, to-be-detected objects encompassing global signal information over a period of time are obtained, this achieves the purpose of improving the accuracy of subsequent data processing from the source of data processing, thereby achieving the technical effect of improving the accuracy of anchor damage detection.

As an optional solution, the obtaining the n phase signals to be detected, including:

S1, emitting, by using a laser light source, laser light into a coupler, where the coupler directs light intensity detection light, which is a first portion of the laser light, into an acousto-optic modulator to obtain a pulse signal, where the acousto-optic modulator is configured to convert the laser light into the pulse signal;

S2, amplifying, using an erbium-doped fiber amplifier, the pulse signal and then inputting it into an optical fiber to obtain Rayleigh scattering light of the optical fiber, and determining two coherent light beams based on the Rayleigh scattering light and a second portion of an intrinsic light split by the coupler;

S3, inputting the two coherent light beams into a balanced detector to obtain a target electrical signal, where the smoothing detector is configured to convert an optical signal into an electrical signal; and

S4, inputting the target electrical signal into an acquisition card to obtain one of the n phase signals output through the acquisition card.

Optionally, in the present embodiment, obtaining n phase signals to be detected may, but is not limited to, be achieved by a distributed optical fiber disturbance monitoring system. DAS adopts a laser light source to emit laser light into the coupler, the coupler transmits 90% of the laser light, which is laser intensity detection light, into an acousto-optic modulator. The acousto-optic modulator converts the laser light into a pulse signal, and the pulse signal is amplified by an erbium-doped fiber amplifier and then input to an optical fiber. Rayleigh scattering light in the optical fiber and the other 10% of intrinsic light split by the coupler enter the coupler, and are outputted as two coherent lights beams into a balanced detector, thereby converting an optical signal into an electrical signal, which is ultimately input into an acquisition card to obtain a phase signal.

With the embodiments provided in this application, the whole process achieves the conversion and extraction from optical signals to electrical signals and then to digital phase signals through the cooperation of components such as laser light source, coupler, acousto-optic modulator, erbium-doped fiber amplifier, optical fiber, balanced detector, and acquisition card, and provides the basic data for the subsequent anchor damage detection, thereby achieving the technical effect of improving the accuracy of anchor damage detection.

As an optional solution, the above method for detecting anchor damage is applied in the scenario of online determination of submarine anchor damage based on a distributed optical fiber disturbance monitoring system. Based on the long-distance and long-term characteristics of anchor damage events, anchor damage events and their positions can be identified, thereby providing accurate and effective alarms.

Specifically, the distributed optical fiber disturbance monitoring system adopts a laser light source to emit laser light into the coupler. The coupler directs 90% of the laser light, which is laser intensity detection light, into the acousto-optic modulator. The acousto-optic modulator converts the laser light into a pulse signal, and the pulse signal after being amplified by the erbium-doped fiber amplifier is input to the optical fiber. The Rayleigh scattering light in the optical fiber and the other 10% of the intrinsic light split by the coupler enter the coupler and are outputted as two coherent light beams into the balanced detector, thereby converting the optical signal into an electrical signal, which is ultimately input into the acquisition card to obtain a phase and envelope signal.

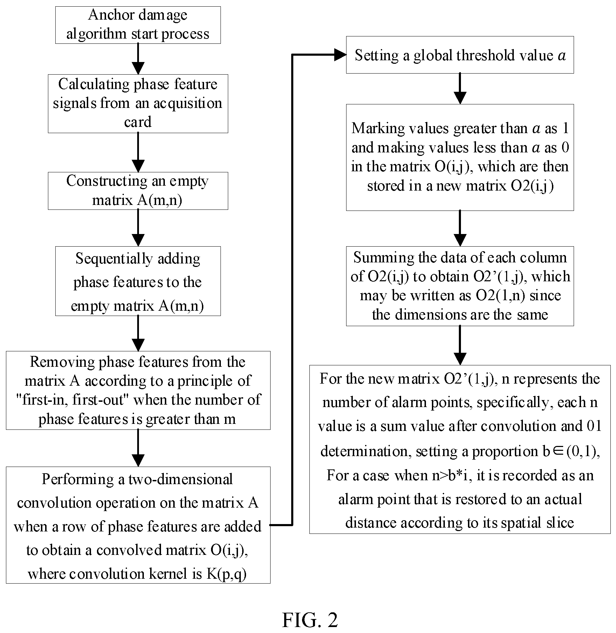

Further, the specific steps of performing feature extraction and processing on the phase signals obtained by the acquisition card to identify anchor intrusion damage events are are shown in FIG. 2. The complete steps are as follows:

Step 1: due to the characteristics of the acquisition card, phase signals are output every 0.1 seconds, the phase signals every 0.1 seconds are subjecting to variance processing, the formula is as follows.

$$\mathrm{var} = \frac{1}{N} \sum_{i=1}^{N} \left( x_i - \mu \right)^2$$

Where $N$ is the number of phase signals every 0.1 seconds, $x_i$ is a value of each phase signal, and $\mu$ is an average phase value every 0.1 seconds.

Step 2: the phase signals every 0.1 second are accumulated to 1 second, and summed to obtain a phase feature signal every 1 second.

Step 3: an empty matrix $A(m, n)$ is constructed, $m$ is the number of rows and is a self-defined parameter, and represents the selection of data for $m$ seconds, $n$ is the number of sampling points on an optical fiber in DAS.

Step 4: the phase feature signals every 1 second in step 2 are sequentially input into the empty matrix $A(m, n)$. When the number of phase feature signals exceeds $m$ and becomes $m$ +1, the original 1th signal is removed from the matrix $A(m, n)$ the original 2nd to m-th data are moved forward to become the 1st to m-1-th data, the subsequent m+1-th data becomes the m-th data, and so on when subsequent new signals enters.

Step 5: a two-dimensional convolution kernel $K(p, q)$ is determined. Whenever a new phase feature enters the matrix $A(m, n)$, a two-dimensional convolution operation is calculated on the matrix $A(m, n)$. The computation process as follows:

$$O(i, j) = (K * A)(i, j) = \sum_p \sum_q A(i - p, j - q) K(p, q)$$

where O($i, j$) is an output matrix, $A(i +p, j +q)K(p, q)$ represents multiplication of an element $A(i + p, j +q)$ in the input matrix and an element $K(p, q)$ in the kernel matrix, $\sum_p$ and $\sum_n$ represent summing in the horizontal and vertical directions of the matrix respectively. When convolution is performed, the matrix $A(m,n)$ needs to be filled with $P_h$ rows and $P_w$ columns to ensure that the input and output have the same height and width. General it is set that $P_h = p$ - 1, $P_w = q$ - 1, the convolution kernel adopts odd height and width to ensure that both ends are filled with equal quantities.

Step 6: For the convolved matrix $O(i, j)$, a threshold value $a$ is set and comparison is made with the threshold value. Elements greater than the threshold value $a$ in the matrix $O(i, j)$ are marked as 1, and elements smaller than the threshold value $a$ in the matrix $O(i, j)$ are marked as 0, which are stored in a new matrix $O2(i, j)$.

Step 7: For the 01 matrix $O2(i, j)$, add column-wise summing is performed to become $O2'(1, j)$. Since the matrix $A(m, n)$ and the matrix $O2(i, j)$ have the same dimensions, $O2'(1, j)$ can also be written as $O2'(1,n)$, where each value of n in $O2'(1,n)$ is a sum of each column in the 01 matrix $O2(i, j)$.

Step 8: For the matrix $O2'(1, n)$, the number of n is the number of monitoring points, and its value is a summed value of each column in the 01 matrix $O2(i, j)$. a proportion $b \in (0,1)$ is set, each value of n is judged. When $n > b * i$, it means that $b * 100\%$ of the signal at this point exceeds the threshold value, and it is determined as an anchor damage alarm signal, and then an index of the point is restored to its true length to achieve the effect of alarming anchor damage.

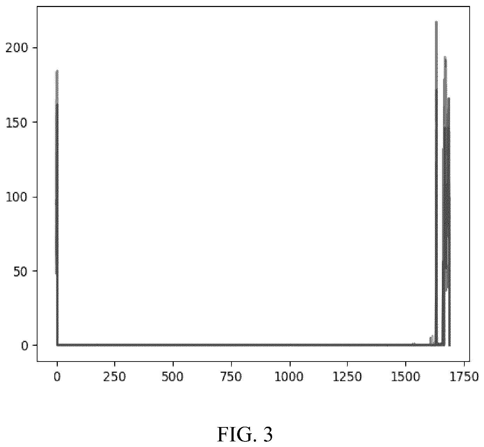

In further illustration, after the acquisition card obtains phase signals, phase signals every 0.1 seconds are subjected to the extraction of feature variances, which are summed after phase signals are accumulated for 1 second. In the present embodiment, as shown in FIG. 3, there are 1689 sampling points in total, so 1689 phase feature signals will be obtained every second.

An empty matrix is constructed. An empty matrix $A(m,n)$ is constructed, $m$ is a self-defined parameter. In the present embodiment, it is defined as 10, representing the selection of data for 10 seconds. $n$ is the number of sampling points on an optical fiber based on a distributed optical fiber disturbance monitoring system, which is 1689 in the present embodiment, so the constructed matrix $A(m, n)$ is specifically $A(10,1689)$.

The above-mentioned phase feature signals every second are sequentially input into the empty matrix $A$ (10,1689). When the accumulation reaches 11 seconds, the number of phase feature signals exceeds 10 and becomes 11. The original 1st signal is removed from the matrix $A(10,1689)$ the original 2nd to 10th data are moved forward to become 1st to 9th data, the subsequent 11th data becomes 10th data, and so on after new signals enter.

A two-dimensional convolution kernel $K(p,q)$ is determined. In the present embodiment, in order to ensure that both ends are filled with equal quantities, an odd number is selected as the height and width of the convolution kernel, and the two-dimensional convolution kernel is separately determined as (3,3) and (5,5), whenever a new phase feature enters matrix $A(10,1689)$, a two-dimensional convolution operation is calculated on the matrix $A(10,1689)$ and the computation process is as follows:

$$O(i, j) = (K * A)(i, j) = \sum_p \sum_q A(i - p, j - q) K(p, q)$$

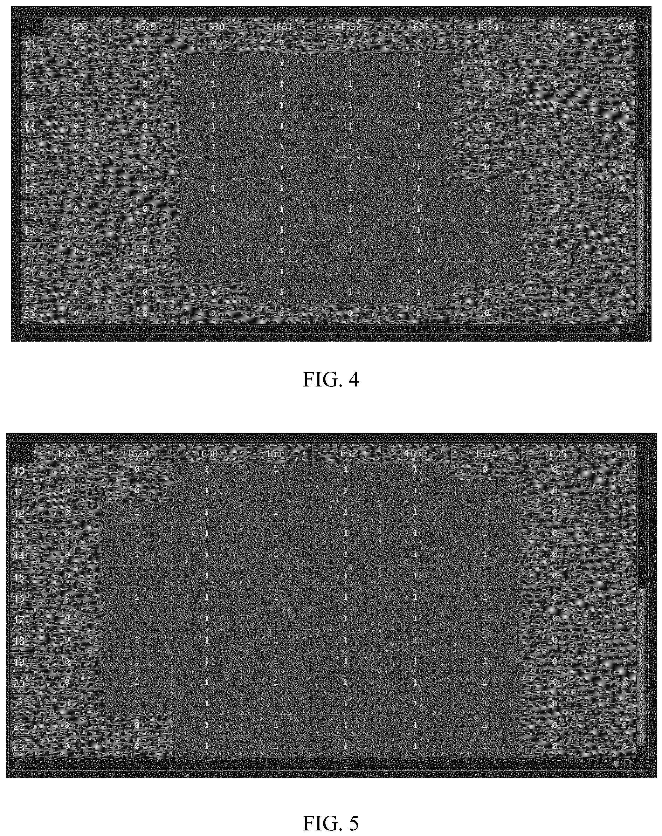

For the convolved matrix $O(i, j)$, it is $O(10,1689)$ in this example, a threshold value $a$ is set and comparison is made with the threshold value. In the matrix $O(10,1689)$, elements greater than the threshold value $a$ are marked as 1, and elements smaller than the threshold value $a$ are marked as 0, which are stored in a new matrix $O2(10,1689)$. In the present example, a matrix threshold $a$ is set to 500. When convolution kernels are (3,3) and (5,5), a 01 matrix of vibration points in the matrix $O2(10,1689)$ is shown as in FIG. 4 and FIG. 5.

For the 01 matrix $O2(10,1689)$, column-wise summing is performed to make it become $O2'(1,1689)$, where every value in $O2'(1,1689)$ is a sum of each column in the 01 matrix $O2(10,1689)$

For the matrix $O2'(1,1689)$, the number of monitoring points in this example is 1689, each of which is a sum of each column in the 01 matrix $O2(10,1689)$. A proportion $b \in (0,1)$ is set, each value of the 1689 monitoring points is judged. When $n > b*i$, it means that $b*100\%$ of signals at this point exceed the threshold, and it is determined as an anchor damage alarm signal, and then an index signal at this point is restored to true length to achieve the effect of anchor damage alarming. In this example, $b$ is 0.8, which means that when signals for 8 seconds exceed convolved threshold $a = 500$ within 10 seconds, an alarm is generated. In FIG. 4, the summed value in the 01 matrix values at points 1631, 1632, and 1633 is 8, which exceeds the threshold. In FIG. 5, the summed value in the 01 matrix at points 1630, 1631, 1632, 1633, and 1634 is 8, which also exceeds the threshold. It can be seen that different convolution kernels have different effects on the sensitivity to anchor damage events, thereby achieving the control of the sensitivity to anchor damage detection through the convolution kernel.

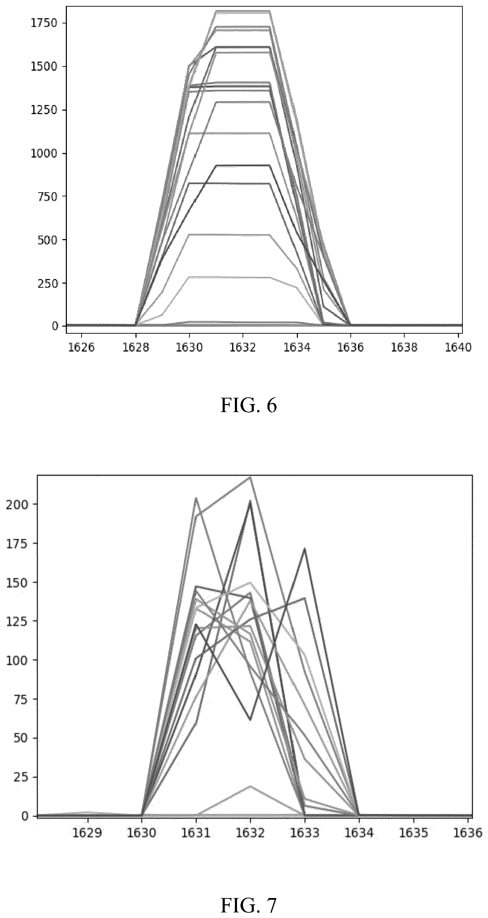

It should be noted that an anchor damage detection effect calculated using the above two-dimensional convolution is as shown in FIG. 6, and an anchor damage detection effect calculated without using the above two-dimensional convolution is as shown in FIG. 7. The anchor damage detection effect obtained by using the above two-dimensional convolution operation is more complete, comprehensive and accurate.

It should be noted that when a two-dimensional convolution operation is performed on the matrix $A(m, n)$, there is an alternative as follows. When each phase feature signal is input to the matrix $A(m, n)$, an one-dimensional convolution kernel $K(1, q)$ can be used first to perform convolving on each column of phase feature signals to obtain $O'(1, j)$, and each column of convolved phase feature signals $O'(1, j)$ are inputted into a matrix to obtain a matrix $O(i, j)$, Its effect is the same as the effect of direct two-dimensional convolution on the entire matrix using a two-dimensional convolution kernel $K(p,q)$. The one-dimensional convolution formula is as follows:

$$O'(1, j) = (K * A)(1, j) = \sum_q A(j - q) K(1, q)$$

With the embodiments provided in the present application, based on the optical fiber disturbance monitoring system, the two-dimensional convolution method is used to determine submarine anchor damage events, which can achieve the functions of autonomously controlling an identification range, and self-defining a duration and vibration intensity of an anchor damage event. In a case of the absence of actual anchor damage data, it is possible to identify and locate anchor damage events to a relatively accurate level.

It should be noted that the steps shown in the flowchart of the accompanying drawings can be executed for example in a computer system having a set of computer-executable instructions, and, although a logical sequence is shown in the flowchart, the steps shown or described may be performed in a sequence different from that presented herein in some cases.

An embodiment of the present application also provides an anchor damage detection apparatus. It should be noted that the anchor damage detection apparatus in the embodiment of the present application can be configured to perform the anchor damage detection method provided by the embodiment of the present application. The anchor damage detection apparatus provided by the embodiment of the present application is introduced below.

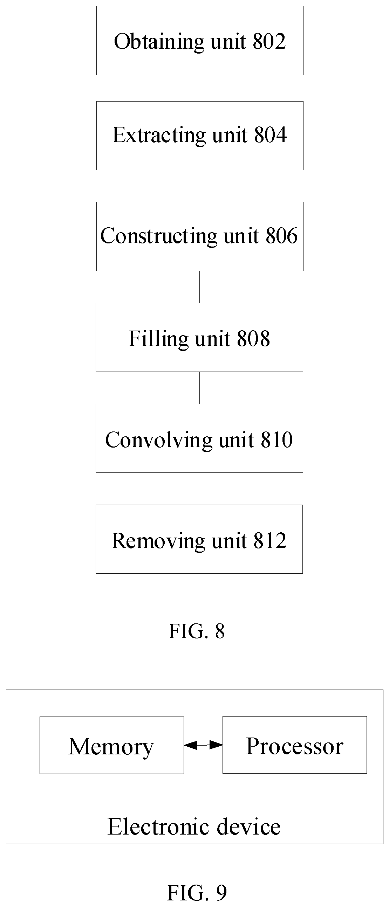

FIG. 8 is a schematic diagram of an apparatus for detecting anchor damage according to an embodiment of the present application. As shown in FIG. 8, the apparatus includes:

an obtaining unit 802, configured to obtain n phase signals to be detected, where n is a positive integer;
an extracting unit 804, configured to perform feature extraction on the n phase signals to obtain p phase signal values corresponding to each phase signal;
a constructing unit 806, configured to construct a target matrix that is initially empty and has a matrix size of m*n, where m indicates first time information selected from all time information corresponding to the p phase signal values, and m and p are positive integers and m is smaller than p;
a filling unit 808, configured to sequentially fill the p phase signal values corresponding to each phase signal into the target matrix, where in a case where an area in which a phase signal value is not filled is non-existent in the target matrix, a target state of the target matrix is determined as a convolution detection state;
a convolving unit 810, configured to perform a convolution processing on the target matrix of the convolution detection state to obtain a first convolution result, and to determine a first anchor damage detection result for each of the n phase signals under the first time information based on the first convolution result;
a removing unit 812, configured to remove the phase signal values that have been filled in a first row of the target matrix, move the phase signal values filled in a second row to a m-th row to the first to a (m-1)-th row, and restore the target state of the target matrix from the convolution detection state to a signal filling state.

As an optional solution, the convolving unit 810 includes:

a first calculating module, configured to perform, by using a two-dimensional convolution kernel, a two-dimensional convolution operation on the target matrix to obtain a first computation matrix with a matrix size of i*j;
a second calculating module, configured to mark elements, whose values are greater than a first preset threshold value, in the first computation matrix as 1, and mark elements, whose values are not greater than the first preset threshold values, in the convolution matrix as 0, to obtain a second computation matrix;
a third calculating module, configured to perform column-wise summing of the elements included in the second computation matrix to obtain a third computation matrix with a matrix size of 1*j;
a judging module, configured to judge each of values of j elements included in the third computation matrix based on the values of the j elements and a second preset threshold value, to obtain the first anchor damage detection result.

As an optional solution, the judgment module includes:

a first determining submodule, configured to sequentially determine each current element from the j elements;
a second determining submodule, configured to determine that an anchor damage risk exists in an optical fiber area for the phase signal corresponding to the current element when the current element has a value greater than the second preset threshold value multiplied by i.

As an optional solution, the first calculating module includes:

an obtaining submodule, configured to obtain the two-dimensional convolution kernel with a matrix size of k*k, where k is an odd number and k is not greater than m and not greater than n;
a filling submodule, configured to perform row filling processing and column filling processing on the target matrix to obtain the filled target matrix with a matrix size of k*k;
a multiplication submodule, configured to perform, by using the two-dimensional convolution kernel, multiplication processing on the filled target matrix.

As an optional solution, the apparatus further includes:

a determining module, configured to sequentially determine n phase signal values from a plurality of phase signal values, which are not filled into the target matrix, of the p phase signal values, after the target state of the target matrix is restored from the convolution detection state to the signal filling state;
a filling module, configured to sequentially fill the n phase signal values in the m-th row area of the target matrix after the target state of the target matrix is restored from the convolution detection state to the signal filling state;
an adjusting module, configured to adjust the target state from the signal filling state to the convolution state after the target state of the target matrix is restored from the convolution detection state to the signal filling state and after all the n phase signal values are filled into the target matrix;
a convolving module, configured to perform second convolution processing on the target matrix of the convolution detection state to obtain a second convolution result after the target state of the target matrix is restored from the convolution detection state to the signal filling state, and to determine a second anchor damage detection result for each of the n phase signals under the second time information based on the second convolution result.

As an optional solution, the extracting unit 804 includes:

an extracting module, configured to perform feature variance extraction on each of the n phase signals respectively according to a first period to obtain phase feature values corresponding to a plurality of first periods;
a summing module, configured to perform summing on the phase feature values corresponding to the plurality of first periods according to a second period to obtain the p phase signal values corresponding to each phase signal, where one second period includes at least two first periods, and different second cycles are mutually non-overlapping.

As an optional solution, the obtaining unit 802 includes:

an emitting module, configured to emit, by using a laser light source, laser light into the coupler, where the coupler directs light intensity detection light, which is a first proportion of the laser light, into an acousto-optic modulator to obtain a pulse signal, and the acousto-optic modulator is configured to convert the laser light into the pulses signal;
an amplifying module, configured to amplify, by using an erbium-doped fiber amplifier, the pulse signal and then inputting it into an optical fiber to obtain Rayleigh scattering light of the optical fiber, and to determine two coherent light beams based on the Rayleigh scattering light and a second portion of intrinsic light split by the coupler;
a first inputting module, configured to input two coherent light beams into a balanced detector to obtain a target electrical signal, where a smoothing detector is configured to convert an optical signal into an electrical signal;
a second inputting module, configured to input the target electrical signal into an acquisition card to obtain each of the n phase signals output through the acquisition card.

An embodiment of the present application provides a computer-readable storage medium on which a program is stored. When the program is executed by a processor, the above anchor damage detection method is implemented.

An embodiment of the present application provides a processor, the processor being configured to run a program, where the above anchor damage detection method is executed when the program is running.

As shown in FIG. 9, an embodiment of the present application provides an electronic device, including a processor, a memory, and a program stored in the memory and executable on the processor. When the processor executes the program, the above anchor damage detection method is implemented.

The processor contains a core, which retrieves corresponding program units from the memory. One or more cores may be provided. By adjusting parameters of cores, target models are trained or optimized, thereby improving the efficiency of data loading.

A memory may include a non-permanent memory in computer-readable media, a random access memory (RAM) and/or a non-volatile memory, such as read-only memory (ROM) or flash memory (flash RAM). The memory includes at least one memory chip.

The skilled person in the art will understand that embodiments of the present application may be provided as methods, systems, or computer program products. Thus, the present application may be in a form of embodiments of entire hardware, embodiments of entire software, or embodiments in which software and hardware are combined. Further, the present application may be in a form of computer program products implemented on one or more computer-usable storage media (including, but not limited to, disk storage, CD-ROM, optical storage, etc.) having computer-usable program codes.

The present application is described with reference to flowcharts and/or block diagrams of methods, devices (systems), and computer program products according to embodiments of the application. It will be understood that each process and/or block in the flowcharts and/or block diagrams, and combinations of processes and/or blocks in the flowcharts and/or block diagrams, can be implemented by computer program instructions. These computer program instructions may be provided to a processor such as general purpose computer, special purpose computer, embedded processor, or other programmable data processing devices to produce a machine, such that an apparatus for implementing the functions specified in one or more processes in the flowcharts and/or one or more blocks in the block diagrams may be produced by means of instructions executed by a computer or other programmable data processing devices.

These computer program instructions may also be stored in a computer-readable memory that causes a computer or other programmable data processing devices to operate in a particular manner, such that the instructions stored in the computer-readable memory produce manufactured articles including instruction apparatuses, the instruction apparatuses implement the functions specified in one or more processes in the flowcharts and/or one or more blocks in the block diagrams.

These computer program instructions may also be loaded onto a computer or other programmable data processing devices, and therefore a series of operating steps are performed on the computer or other programmable devices to produce computer-implemented processing, and thus the instructions executable on the computer or other programmable devices provide the steps for implementing the functions specified in one or more processes in the flowcharts and/or one or more blocks in the block diagrams.

In a typical configuration, a computing device includes one or more processors (CPUs), input/output interfaces, network interfaces, and memory.

The memory may include non-volatile memory, random access memory (RAM), and/or non-volatile memory, such as read-only memory (ROM) or flash memory (flash RAM) in a computer-readable media. The memory is an example of a computer-readable medium.

Computer-readable media includes non-volatile and volatile, removable and non-removable media, to which information may be stored by any method or technology. Information may be computer-readable instructions, data structures, modules of programs, or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic tape cassettes, tape magnetic disk storage or other magnetic storage devices or any other non-transmission medium, which can be used to store information accessible by computing devices. As defined herein, computer-readable media do not include transient computer-readable media (transitory media), such as modulated data signals and carrier waves.

It should also be noted that the terms "including" "containing" or any other variants thereof are intended to cover a non-exclusive inclusion, such that a process, method, product, or device, which includes a series of elements, not only includes those elements, but also includes other elements that are not expressly listed or are inherent to the process, method, product or device. Without further limitation, an element defined by the statement "including a......" does not exclude the presence of additional identical elements in the process, method, product, or device that includes the element.

The person skilled in the art will understand that embodiments of the present application may be provided as methods, systems or computer program products. Accordingly, the present application may take the form of embodiments of entire hardware, embodiments of entire software, or embodiments in which software and hardware are combined. Further, the present application may take the form of a computer program product embodied on one or more computer-usable storage media (including, but not limited to, disk storage, CD-ROM, optical storage, etc.) having computer-usable program codes.

The above are only embodiments of the present application and are not used to limit the present application. For the person skilled in the art, various modifications and variations may be made to this application. Any modifications, equivalent substitutions, improvements, etc. made within the spirit and principles of this application shall be included in the scope of the claims of this application.

**Claims**

1. A method for detecting anchor damage, comprising:

    obtaining n phase signals to be detected, wherein n is a positive integer;

    performing feature extraction on the n phase signals to obtain p phase signal values corresponding to each phase signal;

    constructing a target matrix that is initially empty and has a matrix size of m*n, wherein m indicates first time information selected from all time information corresponding to the p phase signal values, m and p are positive integers, and m is smaller than p;

    sequentially filling the p phase signal values corresponding to each phase signal into the target matrix, wherein in a case where an area in which a phase signal value is not filled is non-existent in the target matrix, a target state of the target matrix is determined as a convolution detection state;

    performing a convolution processing on the target matrix of the convolution detection state to obtain a first convolution result, and determining a first anchor damage detection result for each of the n phase signals under the first time information based on the first convolution result;

    removing the phase signal values filled in a first row of the target matrix, moving the phase signal values filled in a second row to a m-th row of the target matrix to the first row to a (m-1)-th row, respectively, and restoring the target state of the target matrix from the convolution detection state to a signal filling state.

2. The method according to claim 1, wherein the performing the convolution processing on the target matrix in the convolution detection state to obtain the first convolution result and determining the anchor damage detection result for each of the n phase signals based on the first convolution result, comprising:

    performing, by using a two-dimensional convolution kernel, a two-dimensional convolution operation on the target matrix to obtain a first computation matrix with a matrix size of i*j;

    marking elements, whose values are greater than a first preset threshold, in the first computation matrix as 1, and marking elements, whose values are not greater than the first preset threshold, in the convolution matrix as 0 to obtain a second computation matrix;

    performing column-wise summing of the elements included in the second computation matrix to obtain a third computation matrix with a matrix size of 1*j;

    performing judgment on each of values of j elements included in the third computation matrix based on each of the values of the j elements and a second preset threshold value to obtain the first anchor damage detection result.

3. The method according to claim 2, wherein the performing judgment on each of the values of the j elements included in the third computation matrix based on each of the values of the j elements and the second preset threshold value, comprising:

    sequentially selecting each current element from the j elements;

    determining that an anchor damage risk exists in an optical fiber area for the phase signal corresponding to the current element, in a case where the current element has a value greater than the second preset threshold value multiplied by i.

4. The method according to claim 2 or 3, wherein the performing, by using the two-dimensional convolution kernel, the two-dimensional convolution operation on the target matrix, comprising:

obtaining the two-dimensional convolution kernel with a matrix size of k*k, wherein k is an odd number, and k is not greater than m and k is not greater than n;

performing a row filling processing and a column filling processing on the target matrix to obtain a filled target matrix with a matrix size of k*k;

performing, by using the two-dimensional convolution kernel, a multiplication processing on the filled target matrix.

5. The method according to any one of claims 1-4, wherein after the restoring the target state of the target matrix from the convolution detection state to the signal filling state, the method further comprises:

sequentially selecting n phase signal values from a plurality of phase signal values, which are not filled into the target matrix, of the p phase signal values;

sequentially filling the n phase signal values in the m-th row area of the target matrix;

adjusting the target state from the signal filling state to the convolution detection state after all the n phase signal values are filled into the target matrix;

performing a second convolution processing on the target matrix of the convolution detection state to obtain a second convolution result, and determining a second anchor damage detection result for each of the n phase signals under second time information based on the second convolution result.

6. The method according to any one of claims 1-4, wherein the performing the feature extraction on the n phase signals to obtain the p phase signal values corresponding to each phase signal, comprising:

performing feature variance extraction on each of the n phase signals according to a first period to obtain phase feature values corresponding to a plurality of first periods;

summing the phase feature values corresponding to the plurality of first periods according to a second period to obtain the p phase signal values corresponding to each phase signal, wherein one second period comprises at least two first periods, and different second periods are mutually non-overlapping.

7. The method according to any one of claims 1-4, wherein the obtaining the n phase signals to be detected, comprising:

emitting, by using a laser light source, laser light into a coupler, wherein the coupler directs light intensity detection light, which is a first portion of the laser light, into an acousto-optic modulator to obtain a pulse signal, wherein the acousto-optic modulator is configured to convert the laser light into the pulse signal;

amplifying, by using an erbium-doped fiber amplifier, the pulse signal and then inputting it into an optical fiber to obtain Rayleigh scattering light of the optical fiber, and determining two coherent light beams based on the Rayleigh scattering light and a second portion of intrinsic light split by the coupler;

inputting the two coherent light beams into a balanced detector to obtain a target electrical signal, wherein the smoothing detector is configured to convert an optical signal into an electrical signal;

inputting the target electrical signal into an acquisition card to obtain one of the n phase signals output through the acquisition card.

8. An apparatus for detecting anchor damage, comprising:

an obtaining unit, configured to obtain n phase signals to be detected, wherein n is a positive integer;

an extracting unit, configured to perform feature extraction on the n phase signals to obtain p phase signal values corresponding to each phase signal;

a constructing unit, configured to construct a target matrix that is initially empty and has a matrix size of m*n, wherein m indicates first time information selected from all time information corresponding to the p phase signal values, and m and p are positive integers and m is smaller than p;

a filling unit, configured to sequentially fill the p phase signal values corresponding to each phase signal into the target matrix, wherein in a case where an area in which a phase signal value is not filled is non-existent in the target matrix, a target state of the target matrix is determined as a convolution detection state;

a convolving unit, configured to perform a convolution processing on the target matrix of the convolution detection state to obtain a first convolution result, and to determine a first anchor damage detection result for each of the n phase signals under the first time information based on the first convolution result;

a removing unit, configured to remove the phase signal values that have been filled in a first row of the target matrix, move the phase signal values filled in a second row to a m-th row to the first row to a (m-1)-th row, and restore the target state of the target matrix from the convolution detection state to a signal filling state.

9. A processor, wherein the processor is configured to run a program, wherein the program, when running, executes the method according to any one of claims 1-7.

10. An electronic device, comprising one or more processors and a memory, the memory is configured to store one or more programs, wherein the method according to any one of claims 1-7 is implemented by the one or more processors when the one or more programs are executed by the one or more processors.

11. A computer-readable storage medium, wherein the computer-readable storage medium stores a program, and the method according to any one of claims 1-7 is implemented when the program is executed by a processor.

12. A computer program product, comprising a computer program, and the method according to any one of claims 1-7 is implemented when the computer program is executed by a processor.

Obtaining n phase signals to be detected, where n is a positive integer ⌇ S101

Performing feature extraction on the n phase signals to obtain p phase signal values corresponding to each phase signal ⌇ S102

Constructing a target matrix that is initially empty and has a matrix size of m*n, where m is indicates first time information selected from all time information corresponding to the p phase signal values, m and p are positive integers, and m is less than p ⌇ S103

Sequentially filling the p phase signal values, which are corresponding to each phase signal, into the target matrix, where in a case where an area in which a phase signal value is not filled is non-existent, a target state of the target matrix is determined as a convolution detection state ⌇ S104

Performing a convolution processing on the target matrix of the convolution detection state to obtain a first convolution result, and determining a first anchor damage detection result for each of the n phase signals under the first time information based on the first convolution result ⌇ S105

Removing the phase signal values filled in a first row of the target matrix, moving the phase signal values filled in a second row to a m-th row of the target matrix to the first row to a (m-1)-th row, respectively, and restoring the target state of the target matrix from the convolution detection state to a signal filling state ⌇ S106

FIG. 1

Anchor damage
algorithm start process

↓

Calculating phase feature
signals from an acquisition
card

↓

Constructing an empty
matrix A(m,n)

↓

Sequentially adding
phase features to the
empty matrix A(m,n)

↓

Removing phase features from the
matrix A according to a principle of
"first-in, first-out" when the number of
phase features is greater than m

↓

Performing a two-dimensional
convolution operation on the matrix A
when a row of phase features are added
to obtain a convolved matrix O(i,j),
where convolution kernel is K(p,q)

→

Setting a global threshold value $a$

↓

Marking values greater than $a$ as 1
and making values less than $a$ as 0
in the matrix O(i,j), which are then
stored in a new matrix O2(i,j)

↓

Summing the data of each column
of O2(i,j) to obtain O2'(1,j), which
may be written as O2(1,n) since
the dimensions are the same

↓

For the new matrix O2'(1,j), n represents the
number of alarm points, specifically, each n
value is a sum value after convolution and 01
determination, setting a proportion b ∈ (0,1),
For a case when n>b*i, it is recorded as an
alarm point that is restored to an actual
distance according to its spatial slice

FIG. 2

20

FIG. 3

FIG. 4

FIG. 5

FIG. 6

FIG. 7

Obtaining unit 802

Extracting unit 804

Constructing unit 806

Filling unit 808

Convolving unit 810

Removing unit 812

FIG. 8

Memory ◄──► Processor

Electronic device

FIG. 9

## INTERNATIONAL SEARCH REPORT

| | International application No. |
|---|---|
| | **PCT/CN2024/103066** |

**A. CLASSIFICATION OF SUBJECT MATTER**

G06F 17/16(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 光缆, 海缆, 锚, 入侵, 破坏, 锚害, 检测, 监测, 识别, 相位, 卷积; cable, anchor, damage, detect, monitor, recognize, phase, convolution

**C. DOCUMENTS CONSIDERED TO BE RELEVANT**

| Category* | Citation of document, with indication, where appropriate, of the relevant passages | Relevant to claim No. |
|---|---|---|
| PX | CN 117786295 A (ZHONGTIAN POWER OPTICAL CABLE CO., LTD. et al.) 29 March 2024 (2024-03-29) claims 1-10 | 1-12 |
| A | CN 115014726 A (STATE GRID SMART GRID RESEARCH INSTITUTE CO., LTD. et al.) 06 September 2022 (2022-09-06) description, paragraphs [0054]-[0066], and figure 1 | 1-12 |
| A | CN 110751073 A (WUHAN UNIVERSITY OF TECHNOLOGY) 04 February 2020 (2020-02-04) entire document | 1-12 |
| A | CN 116502051 A (ZHUHAI POWER SUPPLY BUREAU, GUANGDONG POWER GRID CORP.) 28 July 2023 (2023-07-28) entire document | 1-12 |
| A | CN 115014571 A (SHANTOU UNIVERSITY) 06 September 2022 (2022-09-06) entire document | 1-12 |
| A | WO 2023273820 A1 (WUHAN WUTOS CO., LTD.) 05 January 2023 (2023-01-05) entire document | 1-12 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 August 2024** | **22 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103066**

| Patent document cited in search report | | | Publication date (day/month/year) | Patent family member(s) | Publication date (day/month/year) |
|---|---|---|---|---|---|
| CN | 117786295 | A | 29 March 2024 | None | |
| CN | 115014726 | A | 06 September 2022 | None | |
| CN | 110751073 | A | 04 February 2020 | None | |
| CN | 116502051 | A | 28 July 2023 | None | |
| CN | 115014571 | A | 06 September 2022 | None | |
| WO | 2023273820 | A1 | 05 January 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311809667